## Europäisches Patentamt
## European Patent Office
## Office européen des brevets

(19)

(11) Publication number : **0 223 310**
**B1**

(12) # EUROPEAN PATENT SPECIFICATION

(45) Date of publication of patent specification :
14.02.90

(51) Int. Cl.⁵ : **G 03 B 21/62**, **G 02 B 3/08**

(21) Application number : **86202025.2**

(22) Date of filing : **17.11.86**

(54) Fresnel lens for projection screens.

(30) Priority : **20.11.85 US 800012**

(43) Date of publication of application :
**27.05.87 Bulletin 87/22**

(45) Publication of the grant of the patent :
**14.02.90 Bulletin 90/07**

(84) Designated contracting states :
**DE FR GB IT NL SE**

(56) References cited :
**US--A-- 4 391 495**
**IEEE TRANSACTIONS ON CONSUMER ELECTRO-
NICS, vol. CE-31, no. 3, August 1985, pages 185-192,
IEEE, New York, US; R. BRADLEY Jr. et al.: "Ultra-
wide viewing angle rear projection television screen"**

(73) Proprietor : **N.V. Philips' Gloeilampenfabrieken
Groenewoudseweg 1
NL-5621 BA Eindhoven (NL)**

(72) Inventor : **Goldenberg, Jill Forer
c/o INT. OCTROOIBUREAU B.V. Prof. Holstlaan 6
NL-5656 AA Eindhoven (NL)**
Inventor : **McKechnie, Thomas Stewart
c/o INT. OCTROOIBUREAU B.V. Prof. Holstlaan 6
NL-5656 AA Eindhoven (NL)**

(74) Representative : **Cobben, Louis Marie Hubert et al
INTERNATIONAAL OCTROOIBUREAU B.V. Prof. Hols-
tlaan 6
NL-5656 AA Eindhoven (NL)**

**Description**

The invention relates to a Fresnel lens for projection screens used in projection systems wherein light is projected from an extended light source by at least one projection lens on a projection screen, the Fresnel lens comprising a base having on one surface thereof a multitude of facets each constituted by a facet surface and a riser surface, the facet surface forming a facet angle with said one surface and the riser surface forming a riser angle with a normal to said one surface.

Such Fresnel lens and a projection screen provided with this lens is known, for example from US patent 4-573-764 which shows a consumer based rear projection television (PTV) system including three CRT's which form the red, green and blue portions of a TV picture. Three projection lenses magnify these images and converge them into a single plane. The projection screen is placed in this plane. Since most of the viewers are located at generally the same vertical position but are spread out horizontally, the screen spreads the light out further in the horizontal direction than in the vertical direction. Therefore, with tthe same light output from the tubes, the use of a well designed screen can increase the brightness in the viewing area by typically three to five times.

The screen acts first as a field lens to bend the ray bundles back towards the axis. It then diffuses light into a desired half-cone angle and it horizontally spreads the light as widely as possible. A screen typically includes an element with a lenticular surface, a light diffusing structure and a second element containing a Fresnel lens.

The purpose of the Fresnel lens is to increase the field of view of the PTV system. In effect it acts as a field lens. It is designed to image the exit pupil of the projection lens to the plane of the viewing audience. Without a field lens, viewers in the center of the viewing space would only see the information from the center of the cathode ray tube. With the field lens, the rays are bent towards the viewer so that he can see the entire picture. Since a Fresnel lens is located at the image plane of the projection lenses, it introduces no aberrations.

Most rear PTV systems utilize a two part screen in which a lenticular array and black stripes are incorporated into the front part while a Fresnel lens is arranged on the rear part of the screen. The linear lenticular array distributes light horizontally and black stripes may be introduced to increase the image contrast by reducing the ambient room light reflections.

Screens in the prior art have been made in either one or two pieces and for front or rear projection. Typically, the Fresnel lenses used in the known rear projection display apparatus have facets whose riser angles are constant. In US Patent 4.391.495 it is mentioned in passing that the riser angle « is coincident with a pencil of light travelling through the system to the exit pupil ». There is no appreciation in US Patent 4.391.495 that this ideal situation cannot be achieved with an extended light source. Furthermore, The US Patent relates to a visual display for use in a simulator device wherein a single observer is located at a predetermined and virtually fixed position, not to a projection system with a light diffusing screen to be watched by a multitude of viewers in an extended viewing area.

The optical performance of the conventional screens with Fresnel lens is limited in terms of the size of the audience space, color shift, resolution and efficiency.

The present invention relates to the design of the riser angle of the facets of the Fresnel lens for the purpose of improving the efficiency, color balance and resolution of a projection screen. The principal objects of the invention are to maximize the light throughput of the screen, to increase the resolution of the Fresnel lens and to improve the color balance of the picture.

The Fresnel lens according to the present invention is characterized in that, in order to increase the efficiency and resolution, the riser angle varies from the center of the Fresnel lens to the outer edge such that the loss of light transmission efficiency due to interception of light originating from the projection lens or projection lenses by said riser surfaces is reduced to a minimum. This variation of the riser angles will increase the efficiency of the Fresnel lens and balance the percentages of light lost from the two extreme edges of the projection lens or projection lenses. Typically, there are three projection lenses corresponding to the three color projectors. The larger the angular subtense of the effective exit pupil of the projection lenses subtended in the screen plane, the greater will be the improvement in performance of the Fresnel lens due to the optimized riser angle. In particular, the riser angle is varied from the center to the outer edge of the lens as a function of the focal length of the lens, the refractive index of the lens and the angular subtense of the pupil. The invention presents a precise equation for calculating the riser angle of each facet of the Fresnel lens which varies according to a relationship which can be approximated by a linear function. The riser angle increases with the distance from the center of the lens to the outer facet. For practical considerations, the riser angle generally must be above a certain minimum angle to permit manufacturing of the lens by a molding technique.

The invention will now more fully be explained with reference to the accompanying drawings, wherein :

Figure 1 is a schematic of a rear projection TV system.

Figure 2 is a schematic view illustrating the riser angle of a Fresnel lens.

Figures 3a and 3b show two possible Fresnel lens configurations in cutaway side views.

Figure 4 is a schematic of two facets of a case I Fresnel lens.

Figure 5 is a schematic view of two facets of a case II Fresnel lens showing the extreme rays from L1 and L3 and the principal ray from L2.

Figure 6 is a schematic view of several facets of a Fresnel lens showing rays which intersect the rising surface and which would consequently be misdirected.

Figure 7 is a plot of typical riser angles as a function of the distance from the center of the lens to its periphery, and the optimum riser angle.

Figures 8a and 8b show plots of possible functions for a riser angle and the loss of efficiency for each.

Figure 9 is a plot of the riser angle function assuming a minimum riser angle required for manufacturing purposes.

The preferred embodiment will be described in the context of a commercially available rear projection television system (PTV) by way of example only. It should be understood that the invention is not limited thereto.

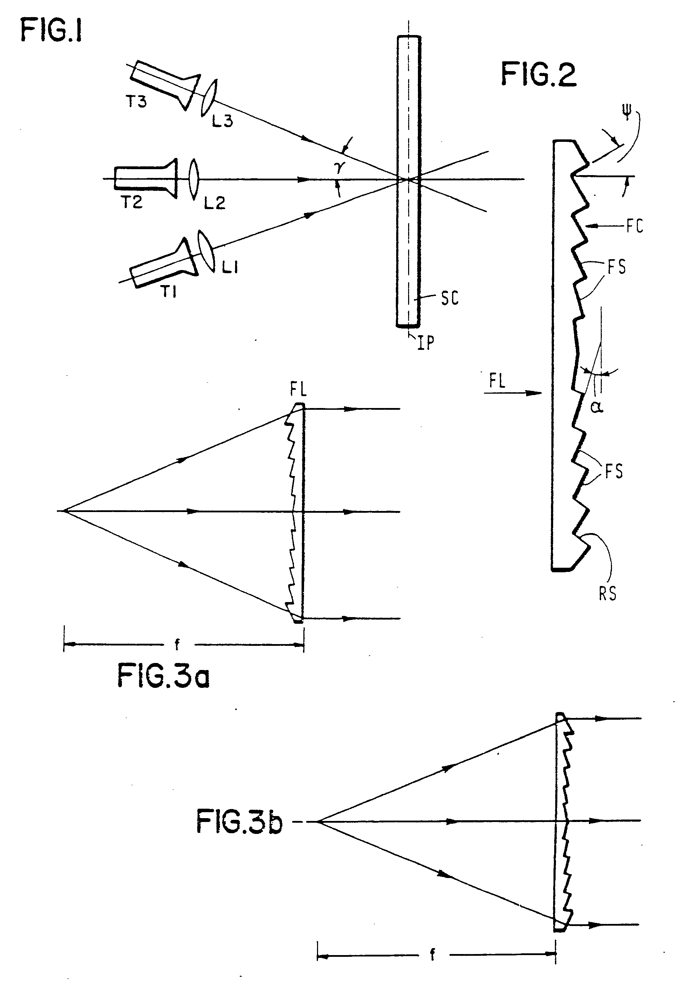

Figure 1 is a schematic view of a rear projection television system (PTV). The three image sources for example cathode ray tubes T1, T2, and T3 form the red, green and blue images respectively. Projection lens L1, L2, and L3 subsequently magnify these images and project them into a single image plane Ip. The angle $\gamma$ is the angle of convergence. The projection screen Sc is placed in this plane to redirect the light toward the viewing audience at the right in figure 1. The screen itself has been described in some detail in an article entitled « Ultrawide Viewing Angle Rear Projection Television Screen », IEEE Transactions on Consumer Electronics, August, 1985. One component of the projection screen is a Fresnel lens which acts as a field lens by bending the ray bundles toward the viewing audience.

The invention relates to the design of the riser angle of the Fresnel lens as a function of the radial distance from the center of the lens. Figure 2 shows a Fresnel lens in a cutaway side view. This lens has a planar surface PS and a second surface comprising a number of facets. Each facet FC has a facet surface FS and a riser surface RS. The angle $\alpha$ between a facet surface and the planar surface of the lens is called the facet angle. From the lens center towards the outer edge the facet angle increases. Figure 2 also defines the riser angle $\psi$, which is the angle between a line projected perpendicularly from the screen or lens substrate and the rising surface of the facet of the Fresnel lens. The purpose of the invention is to increase the efficiency of the Fresnel lens and balance the percentages of light lost from T1 and T3. Each projection lens has a finite sized exit pupil of radius t. The effective exit pupil of the three lens projection system is a combination of the exit pupil of the three lenses. The Fresnel lens is designed to image the effective exit pupil of the projection lens system to the plane of the viewing audience. (Since the viewers are sitting at large distance from the Fresnel lens, this distance can be approximated by infinity.)

Figures 3a and 3b indicate the two possible Fresnel lens configurations. For purposes of simplification, we will refer to the configuration shown in figure 3a as case I and the configuration shown in figure 3b as case II. Although case I lends itself to a one-piece screen (the lenticular surface can be molded onto the back surface), this design is less efficient than case II. The facet angles for case I and case II lenses are different.

In case I Fresnel lens, the facets are facing the light source. The focal length is given by f.

In a case II Fresnel lens, the facets are facing away from the light source. The focal length is given by f.

The focal length, f, of the Fresnel lens of a PTV screen is typically equal to the distance from the exit pupil of the projection lenses to the screen plane. The maximum dimension of the Fresnel lens is the diagonal of the projected image for example a TV picture. Since f is approximately equal to the diagonal of the picture, the Fresnel lens is operating at approximately F/1.

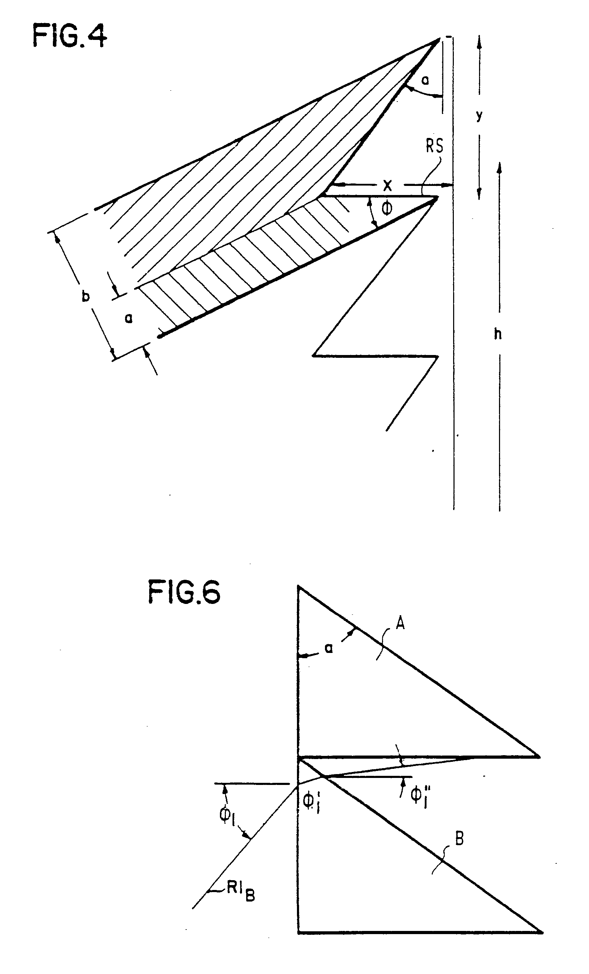

Figure 4 is a schematic of two facets of a case I Fresnel lens. This figure indicates the portion a of the wavefront b which hits the rising surface and is considered lost. The facet angles are given by $\alpha$ and h is the distance from the facet to the center of the lens, not shown. The rays which hit the rising surface are either misdirected or lost but will be considered lost. The percentage of the lost light is given by

$$\% \text{ lost} = 100 \, \frac{a}{b} \tag{1}$$

where a and b represent portions of the wavefront incident at the facet. For a case I Fresnel lens, the angle of the facet is typically designed to collimate incoming rays and is given by

$$\tan (\alpha) = \frac{\sin (\phi)}{n - \cos (\phi)} \tag{2a}$$

where

$$\phi = \tan^{-1} \frac{h}{f} \tag{2b}$$

h is the radial distance of the facet from the center of the lens and n is the index of refraction of the Fresnel lens. If y is the pitch of the facets and x is the length of the rising surface, then

$$\tan (\alpha) = \frac{x}{y} \tag{3}$$

and

$$\sin (\phi) = \frac{a}{x} \tag{4}$$

Therefore,

$$a = y \tan (\alpha) \sin (\phi) \tag{5}$$

The distance b can be given by

$$b = y \sin (90 - \phi) \tag{6a}$$
$$b = y \cos (\phi) \tag{6b}$$

By substituting Eqs. 5 and 6b into 1 it is found that the percentage of light lost in a facet at a distance h from the center of the lens is given by

$$\% \text{ lost} = 100 \tan (\alpha) \tan (\phi) \tag{7}$$

Since $\phi$ is zero for rays incident at the center of the lens, no light is lost for central rays. As h increases, so does the percentage of lost light. For an F/1 lens, approximately a third of the light is lost for the outermost facets. As a result, an F/1 Fresnel lens is extremely inefficient if used in the configuration shown in case I. The rays which hit the rising surface have to be considered lost. In fact, some of this light will reach the final image plane, but in a location other than the ideal image point. This results in a loss of resolution.

The case II Fresnel lens presents significant improvement with respect to efficiency and resolution.

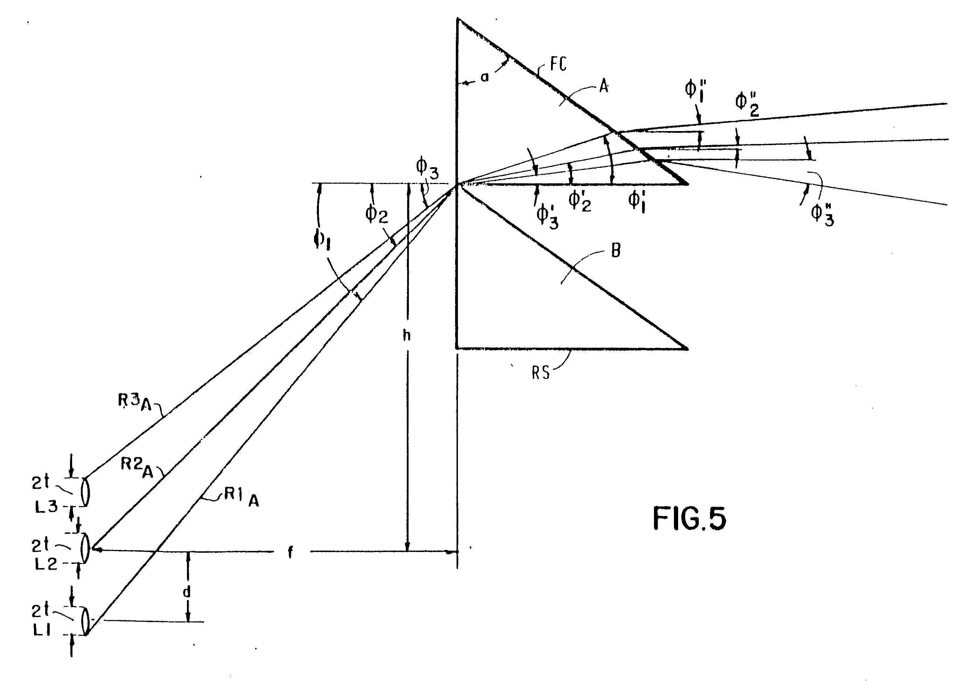

Figure 5 is a schematic of two facets A, B of a case II Fresnel lens and shows two extreme rays from L1 and L3 and the principal ray from L2. The case II Fresnel lens has 100 % efficiency (ignoring Fresnel reflections) for all rays from the center projection lens L2, but some of the rays from lenses L1 and L3 will be incident at the rising surface and will be misdirected. In this section, the optimum riser angle $\psi$ will be found which minimizes the losses. The riser angle is defined in figure 2.

For a case II Fresnel lens, the facet angle $\alpha$ of each facet is chosen to collimate principal rays from the center lens and is given by

$$\tan (\alpha) = \frac{n \sin (\phi_2')}{n \cos (\phi_2')^{-1}} \tag{8a}$$

where $\phi_2$ is the angle of the principal ray from L2 in the facet with respect to the normal on the first surface, and is given by

$$\sin (\phi_2') = \frac{1}{n} \frac{h}{(f^2 + h^2)^{1/2}} \cdot \tag{8b}$$

In figure 5, h is the distance from the facet to the center of the Fresnel lens and f is the focal length of this lens. t is the exit pupil radius and d is the transverse distance between exit pupils of the projection lenses L1, L2 and L3 for the red, green and blue images. The ray labeled $R1_A$ is from the lower edge of the exit pupil of L1. The ray labeled $R2_A$ is the principal ray of L2. The ray labeled $R3_A$ is from the upper edge of the exit pupil of L3. The angles of $R1_A$, $R2_A$ and $R3_A$ (with respect to the normal of the first surface) are $\phi_1$, $\phi_2$ and $\phi_3$, the incoming angles of the rays. $\phi_1'$, $\phi_2'$ and $\phi_3'$ are the angles of the rays in the facet. $\phi_1''$, $\phi_2''$ and $\phi_3''$ are the angles of the rays after refraction. Since the lens collimates the principal ray from L2, $\phi_2'' = 0$.

The angles $\phi_1$, $\phi_2$ and $\phi_3$ are given by

$$\phi_1 = \tan^{-1} \left( \frac{h + t + d}{f} \right) \tag{9a}$$

$$\phi_2 = \tan^{-1} \left( \frac{h}{f} \right) \tag{9b}$$

$$\phi_3 = \tan^{-1} \left( \frac{h - t - d}{f} \right) \cdot \tag{9c}$$

The refracted angles, $\phi_1'$, $\phi_2'$ and $\phi_3'$ can be calculated by using Snell's Law. (Angle $\phi_2'$ is given by Eq. 8b.)

$$\phi_i' = \sin^{-1}\left(\frac{\sin\phi_i}{n}\right)\ ;\quad i = 1, 2, 3\ . \tag{10a}$$

Since $\phi_1 > \phi_2 > \phi_3$ (see Eqs. 9a-9c), $\phi_1' > \phi_2' > \phi_3'$. If h is greater than d + t, $\phi_3' > 0$, and if the riser angle is less than or equal to $\phi_3'$, $R1_A$, $R2_A$ and $R3_A$ will pass through facet A unobstructed. This is a first partial solution to the lens design, namely that the riser angle $\psi$ is less than $\phi_3'$.

By using Snell's Law again, the angles of the rays after refraction at the facets ($\phi_1''$, $\phi_2''$ and $\phi_3''$) can be calculated :

$$\phi_i'' = \alpha - \sin^{-1}\left[n\sin(\alpha - \phi_i')\right]\ ;\quad i = 1, 2, 3 \tag{10b}$$

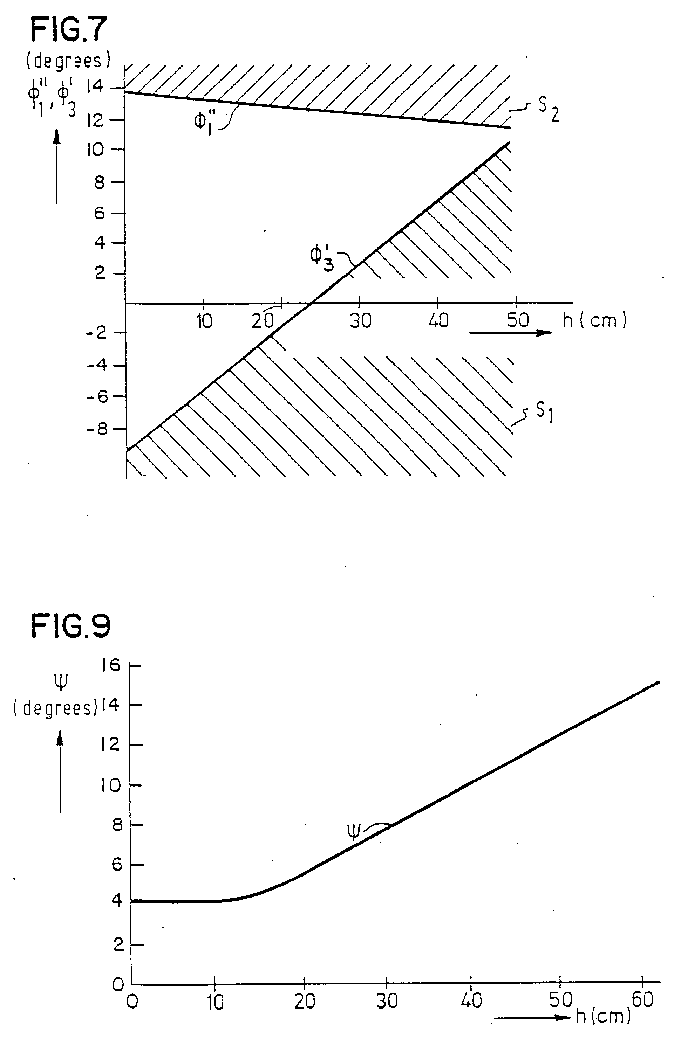

Figure 6 indicates an extreme ray $R1_B$ from L1 passing through the facet B. Although it is unobstructed in the lower facet B, it is incident at rising surface of the facet A and will therefore be lost if its angle is greater than the riser angle.

If $\phi_1''$ is greater than the riser angle, the ray $R1_B$ will be lost or misdirected when it intersects the rising surface of the facet A. Thus, the second partial solution is that the riser angle $\psi$ must be greater than $\phi_1''$.

The facets are designed so that $\phi_2''$ is equal to zero. By geometry, it is clear that $\phi_1''$ will be greater than zero and $\phi_3''$ will be less than zero.

In summary, there are two loss mechanisms associated with the riser surface :

1. If $\psi > \phi_1'$ or $\psi > \phi_2'$ or $\psi > \phi_3'$ light in the facets will hit the rising surface.

Solution 1 : $\psi < \phi_3'$.

2. If $\psi < \phi_1''$ rays that have already passed through the facet will hit the rising surface of the facet above.

Solution 2 : $\psi > \phi_1''$.

Figure 7 contains two plots of $\phi_1''$ versus h and $\phi_3'$ versus h. By investigating these plots and solutions 1 and 2, indicated by the areas S1 and S2 respectively, we find that no function for the riser angle will satisfy both of these solutions. However, it can be shown that the optimal riser angle is the average of $\phi_3'$ and $\phi_1''$.

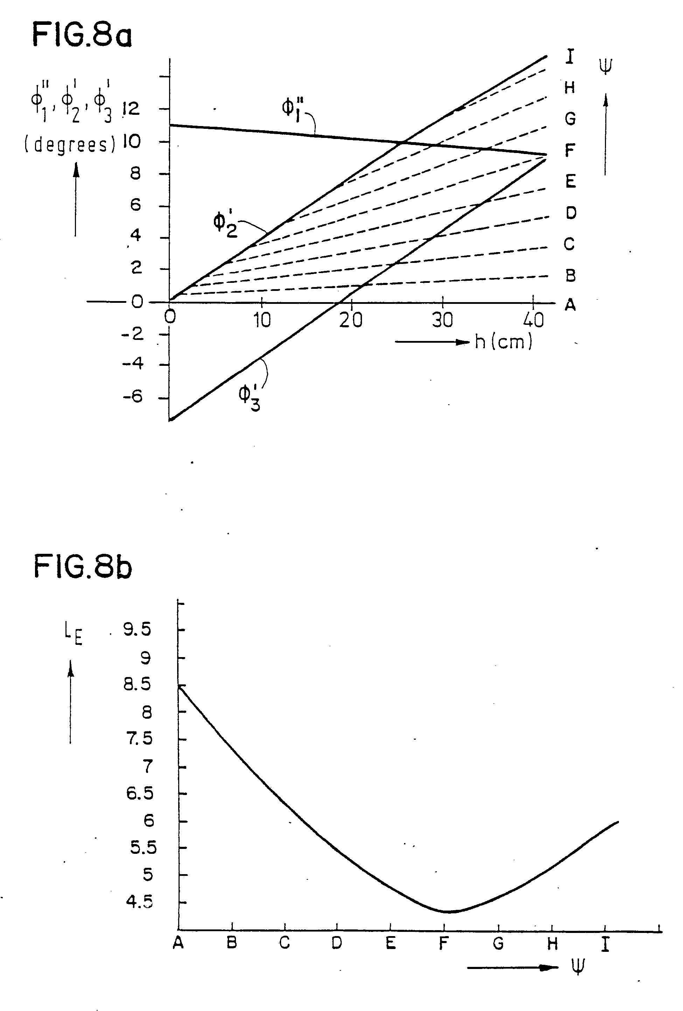

Figure 8a contains three plots. The first, $\phi_3'$ versus h, indicates the angle of the lowest ray in the facet. Ideally, the riser angle should be less than $\phi_3'$ (solution 1). The second, $\phi_1''$ versus h indicates the angle of the highest ray after refraction. Ideally, the riser angle should be greater than $\phi_1''$ (solution 2).

Figure 8a indicates nine possible functions (A-I) for the riser angle $\psi$ as a function of radial distance h. So that all of the light from the center projection lens passes through the Fresnel lens, if the riser angle is always less than $\phi_2'$. Figure 8b contains plots of the loss of efficiency ($L_E$) for each riser angle $\psi$ (A-I). Note that minimum loss, and therefore the highest efficiency occurs when the riser angle is the average of $\phi_1''$ and $\phi_3''$, i. e., F. Hence the optimal riser angle $\psi$ is the average of these two angles.

For manufacturing reasons, a minimum riser angle ($\psi_{min}$) is required : The actual riser function is shown in Figure 9.

## Claims

1. A Fresnel lens for projection screens used in projection systems wherein light is projected from an extended light source by at least one projection lens on a projection screen, the Fresnel lens comprising a base having on one surface thereof a multitude of facets (FC) each constituted by a facet surface (FS) and a riser surface (RS), the facets of said Fresnel lens facing the viewing side of said screen, the facet surface forming a facet angle ($\alpha$) with said one surface and the riser surface forming a riser angle ($\psi$) with a normal to said one surface wherein light is projected from the extended light source by at least one projection lens (L1, L2, L3), whereby a first ray ($R1_A$) originating from a first extreme edge of said projection lens or projection lenses (L1, L2, L3) is refracted by said facet (FC) at a first angle ($\phi_1''$), and a second ray ($R3_A$) originating from a second extreme edge of said projection lens or projection lenses (L1, L2, L3), located diametrically from the first extreme edge, is refracted in said base and said facet at a second angle ($\phi_3'$), the riser angle ($\psi$) of said facet being substantially equal to the average of said first and second angles.

2. A Fresnel lens as claimed in Claim 1, characterized in that the riser angle ($\psi$) varies as a function of the radial distance (h) of said facets from the center of said lens, said function being approximately linear.

3. A Fresnel lens as claimed in Claim 1 or 2, characterized in that said riser angles ($\psi$) have a minimum value and vary only at facets distant from the center of said lens wherein the calculated optimal riser angle exceeds said minimum.

4. A colour projection TV system having three image sources for the primary colours, three projection lenses and one projection screen, characterized in that the projection screen comprises a Fresnel lens as claimed in Claim 1, 2 or 3.

# EP 0 223 310 B1

**Patentansprüche**

1. Fresnellinse für Projektionsschirme zur Verwendung in Projektionssysteme, in denen aus einer ausgebreitete Lichtquelle durch wenigstens eine Projektionslinse Licht auf einen Projektionsschirm geworfen wird, wobei die Fresnellinse eine Basis enthält, auf deren einer Oberfläche eine Vielzahl von Facetten (FC) vorgesehen ist, die aus je einer Facettenfläche (FS) und einer Steigfläche (RS) bestehen, wobei die Facetten dieser Fresnellinse der Betrachtungsseite des Schirmes zugewandt sind, die Facettenfläche einen Facettenwinkel ($\alpha$) mit der einen Oberfläche und die Steigfläche einen Steigwinkel ($\psi$) mit einer Senkrechten auf dieser einen Oberfläche bilden, in denen Projektionssysteme aus der ausgebreitete Lichtquelle durch wenigstens eine Projektionslinse (L1, L2, L3) Licht projiziert wird, wobei ein erster Strahl ($R1_A$) aus einer ersten äußersten Kante der Projektionslinse oder Projektionslinsen (L1, L2, L3) durch die Facette (FC) in einem ersten Winkel ($\phi_1$") gebrochen wird, und ein zweiter Strahl ($R3_A$) aus einer zweiten äußersten, der ersten äußersten Kante diametral gegenüherliegenden Kante der Projektionslinse oder Projektionslinsen (L1, L2, L3) in der Basis und in der Facette in einem zweiten Winkel ($\phi_3'$) gebrochen wird, wobei der Steigwinkel ($\psi$) der Facette im wesentlichen gleich dem Mittelwert der ersten und zweiten Winkel ist.

2. Fresnellinse nach Anspruch 1, dadurch gekennzeichnet, daß der Steigwinkel $\psi$) sich abhängig vom Radialabstand (h) der Facetten aus der Mitte der Linse ändert, und diese Abhängigkeit ungefähr linear verläuft.

3. Fresnellinse nach Anspruch 1 oder 2, dadurch gekennzeichnet, daß die Steigwinkel ($\psi$) einen Mindestwert haben und sich nur bei von der Mitte der Linse entfernten Facetten ändern, wobei der berechnete optimale Steigwinkel diesen Mindestwert übersteigt.

4. Farbfernseh-Projektionssystem mit drei Bildquellen für die Primärfarben, mit drei Projektionslinsen und einem Projektionsschirm, dadurch gekennzeichnet, daß der Projektionsschirm eine Fresnellinse nach Anspruch 1, 2 oder 3 enthält.

**Revendications**

1. Lentille de Fresnel pour des écrans de projection utilisés dans des systèmes de projection où de la lumière émise par une source lumineuse étendue est projetée par au moins une lentille de projection sur un écran de projection, lentille de Fresnel qui comporte une base présentant, sur l'une de ses surfaces, une multitude de facettes (FC) constituées chacune par une surface de facette (FS) et une surface de montant (RS), les facettes de ladite lentille de Fresnel étant situées en regard de la face de vision dudit écran, la surface de facette faisant un angle de facette ($\alpha$) avec ladite surface et la surface de montant faisant un angle de montant ($\psi$) avec une normale à ladite surface, où de la lumière provenant de la source lumineuse étendue est projetée par au moins une lentille de projection (L1, L2, L3), un premier rayon ($R1_A$) provenant d'un premier bord extrême de ladite lentille de projection ou desdites lentilles de projection (L1, L2, L3) est réfracté d'un premier angle ($\phi_1$") par ladite facette (FC), et un deuxième rayon ($R3_A$) provenant d'un deuxième bord extrême de ladite lentille de projection ou desdites lentilles de projection (L1, L2, L3), situées diamétralement par rapport au premier bord extrême, est refracté d'un deuxième angle ($\phi_3'$) dans ladite base et ladite facette, l'angle de montant ($\psi$) de ladite facette étant sensiblement égal à la moyenne desdits premier et deuxième angles.

2. Lentille de Fresnel selon la revendication 1, caractérisée en ce que l'angle de montant ($\psi$) varie en fonction de la distance radiale (h) séparant lesdites facettes du centre de ladite lentille, fonction qui est à peu près linéaire.

3. Lentille de Fresnel selon la revendication 1 ou 2, caractérisée en ce que lesdits angles de montant ($\psi$) ont une valeur minimale et ne varient qu'à l'endroit de facettes distantes du centre de ladite lentille et dans lesquelles l'angle de montant optimal calculé dépasse ladite valeur minimale.

4. Système de télévision en couleurs à projection muni de trois sources d'image pour les couleurs primaires, de trois lentilles de projection et d'un écran de projection, caractérisé en ce que l'écran de projection comporte une lentille de Fresnel selon la revendication 1, 2 ou 3.

6

# FIG.1

# FIG.2

T3

L3

T2

L2

$\gamma$

L1

T1

SC

IP

$\psi$

FC

FS

FL

$\alpha$

FS

RS

FL

# FIG.3a

f

# FIG.3b

f

1

## FIG.4

## FIG.6

FIG.5

# FIG.7

# FIG.9

4

# FIG.8a

# FIG.8b